# EUROPEAN PATENT APPLICATION

(11) **EP 4 598 090 A1**
(43) Date of publication of application: **06.08.2025**
(21) Application number: 22960134.9
(22) Date of filing: 29.09.2022
(51) Int. Cl.: H04W 24/00

(54) **LAYER 1 (L1) MOBILITY MEASUREMENT METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2022/122867
(87) International publication number: WO 2024/065498

(57) **Abstract**

Embodiments of the present disclosure provide a Layer 1 (L1) mobility measurement method, the method being executed by an access network device. The method comprises: sending configuration information used for L1 mobility measurement to a terminal, the configuration information comprising frequency point information for mobility measurement, and the frequency point information indicating at least one of the following: a service frequency point, a same frequency point, and a different frequency point. Compared with a means in which it is only possible to execute mobility measurement of a same frequency cell of L1, it is possible to execute mobility measurement of a same frequency cell and/or a different frequency cell, which helps mobility measurement management.

## Description

### TECHNICAL FIELD

The present disclosure relates to but is not limited to the field of wireless communication technology, and in particular to a layer 1 (L1) mobility measurement method, apparatus, communication equipment and storage medium.

### BACKGROUND

The terminal can perform layer 1 (L1, Layer1) measurement on the reference signal of the serving cell according to the configuration information, obtain the measurement result, and send the measurement result to the network side device to perform the mobility management of the terminal. The L1 measurement includes at least one of the following: layer 1 reference signal received power (RSRP, Reference Signal Received Power) measurement; layer 1 signal-to-noise and interference ratio (SINR, Signal-to-noise and Interference Ratio) measurement; and layer 1 reference signal received quality (RSRQ, Reference Signal Received Quality) measurement. In the related technology, it is clear that cross-cell mobility mechanisms based on L1 or L2 should be supported to reduce mobility delay. In order to support L1 inter-cell measurements, L1-related measurement and reporting configurations need to be reconfigured.

### SUMMARY

The embodiments of the present disclosure disclose a method, an apparatus, a communication device and a storage medium for layer 1 (L1) mobility measurement.

According to a first aspect of an embodiment of the present disclosure, a layer 1 (L1) mobility measurement method is provided, wherein the method is performed by an access network device, and the method includes:
sending configuration information for L1 mobility measurement to a terminal;
wherein the configuration information includes frequency information of mobility measurement; and the frequency information indicates at least one of the following: a service frequency; an intra-frequency frequency; and an inter-frequency frequency.

In an embodiment, the configuration information further includes at least one of the following:
measurement identification information;
measurement object information;
reporting configuration information; and
measurement gap configuration information.

In an embodiment, the measurement object information indicates at least one of the following:
a target frequency point to be measured;
a reference signal configuration;
an SS block based RRM measurement timing configuration (SMTC) configuration; and
a quasi co-located (QCL) relationship.

In an embodiment, the reference signal configuration reuses the reference signal configuration of channel state information (CSI) reporting.

In an embodiment, the measurement gap configuration information indicates a measurement gap and a priority corresponding to the measurement gap; and the priority corresponding to the measurement gap is different from a priority corresponding to a layer 3 (L3) measurement gap.

In an embodiment, the measurement gap configuration information indicates a measurement gap; and the measurement gap is used to determine an L1 measurement gap together with a sharing factor related to a layer 3 (L3) measurement gap.

In an embodiment, the sharing factor is determined based on a protocol rule; or the sharing factor is indicated by the measurement gap configuration information.

In an embodiment, the sending the configuration information for layer 1 (L1) mobility measurement to the terminal includes:
sending the configuration information for layer 1 (L1) mobility measurement to the terminal through a radio resource control (RRC) message.

According to a second aspect of the embodiment of the present disclosure, a method for layer 1 (L1) mobility measurement is provided, wherein the method is performed by a terminal, and the method includes:
receiving configuration information for L1 mobility measurement from an access network device;
wherein the configuration information includes frequency information of mobility measurement; and the frequency information indicates at least one of the following: a service frequency; an intra-frequency frequency; and an inter-frequency frequency.

In an embodiment, the configuration information further includes at least one of the following:
measurement identification information;
measurement object information;
reporting configuration information; and
measurement gap configuration information.

In an embodiment, the measurement object information indicates at least one of the following:
a target frequency point to be measured;
a reference signal configuration;
an SS block based RRM measurement timing configuration (SMTC) configuration; and
a quasi co-located (QCL) relationship.

In an embodiment, the reference signal configuration reuses the reference signal configuration of channel state information (CSI) reporting.

In an embodiment, the measurement gap configuration information indicates a measurement gap and a priority corresponding to the measurement gap; and the priority corresponding to the measurement gap is different from a priority corresponding to an L3 measurement gap.

In an embodiment, the measurement gap configuration information indicates a measurement gap; and the measurement gap is used to determine a layer 1 measurement gap together with a sharing factor related to an L3 measurement gap.

In an embodiment, the sharing factor is determined based on a protocol rule; or the sharing factor is indicated by the measurement gap configuration information.

In an embodiment, the receiving the configuration information for layer 1 mobility measurement from the access network device includes:
receiving the configuration information for layer 1 mobility measurement from the access network device through a radio resource control (RRC) message.

In an embodiment, the method further includes:
in response to receiving the configuration information, performing an L1 serving cell and/or a neighboring cell measurement based on the configuration information.

In an embodiment, the performing the layer 1 serving cell and/or the neighboring cell measurement based on the configuration information includes:
for the L1 neighboring cell measurement that needs a configured measurement gap, performing the neighboring cell measurement within the measurement gap indicated by the configuration information.

In an embodiment, the neighboring cell measurement is not needed in response to a case where a center frequency of a reference signal of a serving cell of the terminal is the same as a center frequency of a target reference signal to be measured, a subcarrier spacing of the center frequencies is the same, and the target reference signal to be measured is completely included in an activated bandwidth part (BWP) on which the terminal is operated.

In an embodiment, the method further includes:
sharing an L3 measurement gap in response to performing L1 neighboring cell measurement requiring a measurement gap while no L1 measurement gap is configured.

In an embodiment, the sharing the L3 measurement gap includes:
sharing the L3 measurement gap based on measurement gap sharing scheme configuration information of an RRC message;
   or,
sharing the L3 measurement gap based on a protocol rule.

According to a third aspect of the embodiment of the present disclosure, a layer 1 (L1) mobility measurement apparatus is provided, wherein the apparatus includes:
a sending module, configured to send configuration information for layer 1 mobility measurement to the terminal;
wherein the configuration information includes frequency information of mobility measurement; and the frequency information indicates at least one of the following: a service frequency; an intra-frequency frequency; and an inter-frequency frequency.

According to a fourth aspect of the embodiment of the present disclosure, a layer 1 (L1) mobility measurement apparatus is provided, wherein the apparatus includes:
a receiving module, configured to receive configuration information for layer 1 mobility measurement from a base station;
wherein the configuration information includes frequency information of mobility measurement; and the frequency information indicates at least one of the following: a service frequency; an intra-frequency frequency; and an inter-frequency frequency.

According to a fifth aspect of the embodiment of the present disclosure, a communication device is provided, wherein the communication device includes:
a processor; and
a memory for storing instructions executable by the processor;
the processor is configured to implement the method described in any embodiment of the present disclosure when running the executable instructions.

According to a sixth aspect of an embodiment of the present disclosure, a computer storage medium is provided, wherein the computer storage medium stores a computer executable program, and when the executable program is executed by a processor, the method described in any embodiment of the present disclosure is implemented.

In an embodiment of the present disclosure, configuration information for L1 mobility measurement is sent to a terminal; wherein the configuration information includes frequency information for mobility measurement; the frequency information indicates at least one of the following: a service frequency; an intra-frequency frequency; and an inter-frequency frequency. Here, since the access network device sends frequency information indicating at least one of the service frequency, intra-frequency frequency, and inter-frequency frequency to the terminal, after receiving the frequency information, the terminal can perform L1 mobility measurement intra-frequency cells and/or inter-frequency cells based on the frequency information. Compared with the method of only performing L1 mobility measurement of intra-frequency cells, the terminal can perform mobility measurement of intra-frequency cells and/or inter-frequency cells, which is beneficial to the management of mobility measurement.

### BRIEF DESCRIPTION OF THE DRAWINGS

FIG. 1 is a schematic structural diagram of a wireless communication system according to an exemplary embodiment.
FIG. 2 is a schematic flow chart of a method for layer 1 (L1) mobility measurement according to an exemplary embodiment.
FIG. 3 is a schematic flow chart of a method for layer 1 (L1) mobility measurement according to an exemplary embodiment.
FIG. 4 is a schematic flow chart of a method for layer 1 (L1) mobility measurement according to an exemplary embodiment.
FIG. 5 is a schematic flow chart of a method for layer 1 (L1) mobility measurement according to an exemplary embodiment.
FIG. 6 is a schematic flow chart of a method for layer 1 (L1) mobility measurement according to an exemplary embodiment.
FIG. 7 is a schematic flow chart of a method for layer 1 (L1) mobility measurement according to an exemplary embodiment.
FIG. 8 is a schematic flow chart of a method for layer 1 (L1) mobility measurement according to an exemplary embodiment.
FIG. 9 is a schematic flow chart of a method for layer 1 (L1) mobility measurement according to an exemplary embodiment.
FIG. 10 is a schematic flow chart of a method for layer 1 (L1) mobility measurement according to an exemplary embodiment.
FIG. 11 is a schematic flow chart of a method for layer 1 (L1) mobility measurement according to an exemplary embodiment.
FIG. 12 is a schematic diagram showing an apparatus for layer 1 (L1) mobility measurement according to an exemplary embodiment.
FIG. 13 is a schematic diagram showing an apparatus for layer 1 (L1) mobility measurement according to an exemplary embodiment.
FIG. 14 is a schematic diagram showing the structure of a terminal according to an exemplary embodiment.
FIG. 15 is a block diagram of a base station according to an exemplary embodiment.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the embodiments of the present disclosure. Instead, they are merely examples of devices and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms of "a" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, the information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining".

For the purpose of brevity and ease of understanding, the terms "greater than" or "less than" are used herein to characterize size relationships. However, those skilled in the art can understand that the term "greater than" also covers the meaning of "greater than or equal to", and "less than" also covers the meaning of "less than or equal to".

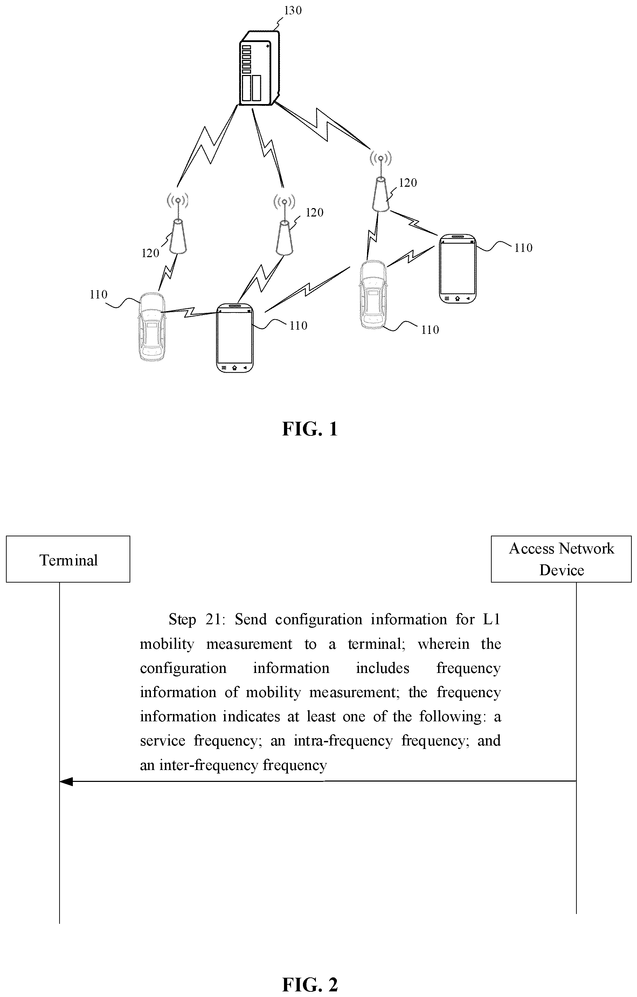

Please refer to FIG. 1, which shows a schematic diagram of the structure of a wireless communication system provided by an embodiment of the present disclosure. As shown in FIG. 1, the wireless communication system is a communication system based on mobile communication technology, and the wireless communication system may include: a plurality of user equipments 110 and a plurality of base stations 120.

The user equipment 110 can be a device that provides voice and/or data connectivity to the user. The user equipment 110 can communicate with one or more core networks via a radio access network (RAN). The user equipment 110 can be an Internet of Things user equipment, such as a sensor device, a mobile phone, and a computer with an Internet of Things user equipment. For example, it can be a fixed, portable, pocket-sized, handheld, computer-built-in or vehicle-mounted device. For example, a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 can also be a device of an unmanned aerial vehicle. Alternatively, the user equipment 110 can also be a vehicle-mounted device, for example, it can be a driving computer with wireless communication function, or a wireless user device externally connected to a driving computer. Alternatively, the user equipment 110 may also be a roadside device, for example, a street lamp, a signal lamp, or other roadside device with a wireless communication function.

The base station 120 may be a network-side device in a wireless communication system. The wireless communication system may be a fourth generation mobile communication technology (4G) system, also known as a long term evolution (LTE) system; or, the wireless communication system may be a 5G system, also known as a new air interface system or a 5G NR system. Alternatively, the wireless communication system may be a next generation system of the 5G system. The access network in the 5G system may be referred to as NG-RAN (New Generation-Radio Access Network).

The base station 120 can be an evolved base station (eNB) adopted in a 4G system. Alternatively, the base station 120 can also be a base station (gNB) adopting a centralized distributed architecture in a 5G system. When the base station 120 adopts a centralized distributed architecture, it usually includes a centralized unit (CU) and at least two distributed units (DU). The centralized unit is provided with a protocol stack of a packet data convergence protocol (PDCP) layer, a radio link layer control protocol (RLC) layer, and a media access control (MAC) layer; the distributed unit is provided with a physical (PHY) layer protocol stack. The specific implementation method of the base station 120 is not limited in the embodiment of the present disclosure.

A wireless connection may be established between the base station 120 and the user equipment 110 via a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new radio interface; or, the wireless air interface may also be a wireless air interface based on the next generation mobile communication network technology standard of 5G.

In some embodiments, an E2E (End to End) connection may also be established between the user devices 110, such as V2V (vehicle to vehicle) communication, V2I (vehicle to Infrastructure) communication, and V2P (vehicle to pedestrian) communication in vehicle to everything (V2X) communication.

Here, the above-mentioned user equipment can be considered as the terminal equipment of the following embodiments.

In some embodiments, the above wireless communication system may further include a network management device 130.

Several base stations 120 are respectively connected to a network management device 130. The network management device 130 may be a core network device in a wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF), or a home subscriber server (HSS). The embodiments of the present disclosure do not limit the implementation form of the network management device 130.

In order to facilitate the understanding of those skilled in the art, multiple implementation methods are exampled in the embodiments of the present disclosure to clearly illustrate the technical solutions of the embodiments of the present disclosure. Of course, those skilled in the art can understand that the multiple embodiments provided by the embodiments of the present disclosure can be executed separately, or can be executed together with the methods of other embodiments of the embodiments of the present disclosure, or can be executed together with some methods in other related technologies separately or in combination; the embodiments of the present disclosure do not limit this.

As shown in FIG. 2, this embodiment provides a layer 1 (L1) mobility measurement method, wherein the method is performed by an access network device, and the method includes:
Step 21: Send configuration information for L1 mobility measurement to a terminal;

The configuration information includes frequency information of mobility measurement; the frequency information indicates at least one of the following: a service frequency; an intra-frequency frequency; and an inter-frequency frequency.

Here, the terminal involved in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of a new air interface NR terminal (for example, an R17 NR terminal).

The access network device involved in the present disclosure may be a base station, and the base station may be various types of base stations, for example, a base station of a third generation mobile communication (3G) network, a base station of a fourth generation mobile communication (4G) network, a base station of a fifth generation mobile communication (5G) network, or other evolved base stations.

In one embodiment, the L1 mobility measurement includes at least one measurement:
Layer 1 RSRP measurement;
Layer 1 SINR measurement;
Layer 1 RSRQ measurement;
Beam failure measurement for beam failure recovery; and
Candidate beam measurement for beam failure recovery.

In one embodiment, the configuration information further includes at least one of the following:
Measurement identification information;
Measurement object information;
Reporting configuration information; and
Measurement gap configuration information.

In one embodiment, the measurement object information indicates the target object of the measurement, and the target object may be a frequency point, for example, a service frequency point, an intra-frequency frequency point and/or an inter-frequency frequency point. The measurement object information may also indicate the configuration parameters of the reference signal corresponding to the target object, the SS block based RRM measurement timing configuration (SMTC) parameter of the target object and/or the quasi co-located (QCL, Quasi CoLoacted) relationship.

In an embodiment, the measurement object information indicates at least one of the following:
A target frequency point to be measured;
A reference signal configuration;
An SS block based RRM measurement timing configuration (SMTC) parameter; and
A quasi co-located (QCL) relationship.

In one embodiment, the reference signal configuration reuses the reference signal configuration reported by the channel state information (CSI). Exemplarily, the configuration parameters of the reference signal may reuse the parameters configured by the CSI-ResourceConfig message in the CSI reporting in the related art.

In one embodiment, the reporting configuration information indicates a measurement reporting rule, and the measurement reporting rule may indicate a measurement reporting identifier and a measurement reporting configuration parameter corresponding to the identifier, wherein the configuration parameter may include an event-triggered reporting parameter and/or a period-triggered reporting parameter. In this way, the terminal can perform the reporting of the measurement result of the mobility measurement based on the measurement reporting rule.

In one embodiment, the measurement identification information indicates an identification indicating a mapping relationship between a predetermined measurement object and a predetermined measurement reporting configuration parameter. Exemplarily, if the terminal determines that the measurement start threshold is met, the terminal determines whether to start the measurement corresponding to the start threshold based on the presence or absence of the measurement identification information.

In an embodiment, the measurement gap configuration information indicates a measurement gap. The measurement gap configuration information may be configured in units of frequency range (FR) or in units of a single terminal.

In one embodiment, it is determined whether the terminal needs to perform mobility measurement of a neighboring cell based on a measurement gap; in response to the terminal needing to perform mobility measurement of a neighboring cell based on the measurement gap, the configuration information includes the measurement gap configuration information; or, in response to the terminal not needing to perform mobility measurement of a neighboring cell based on the measurement gap, the configuration information does not include the measurement gap configuration information. It should be noted that, in response to the center frequency of the reference signal of the serving cell of the terminal being the same as the center frequency of the target reference signal to be measured, and the subcarrier spacing between the two being the same, and the target reference signal to be measured being completely included within the activated bandwidth part (BWP, Bandwidth Part) of the terminal, it does not need to perform mobility measurement of the neighboring cell based on the measurement gap, otherwise, it needs to perform mobility measurement of the neighboring cell based on the measurement gap.

In one embodiment, in response to the terminal needing to perform mobility measurement of a neighboring cell based on the measurement gap, the measurement gap configuration information indicates a measurement gap and a priority corresponding to the measurement gap; the priority corresponding to the measurement gap is different from the priority corresponding to the layer 3 (L3) measurement gap. It should be noted that the L3 measurement gap is a measurement gap configured for L3 mobility measurement.

In one embodiment, the priority of the measurement gap configured for the L1 mobility measurement is higher than the priority of the measurement gap configured for the L3 mobility measurement. Thus, in response to a conflict between the timing of the L1 mobility measurement and the timing of the L3 mobility measurement, preferentially, the L1 mobility measurement is performed based on the measurement gap configured for the L1 mobility measurement.

In one embodiment, the priority of the measurement gap configured for the L1 mobility measurement is lower than the priority of the measurement gap configured for the L3 mobility measurement. Thus, in response to a conflict between the timing of the L1 mobility measurement and the timing of the L3 mobility measurement, preferentially, the L3 mobility measurement is performed based on the measurement gap configured for the L3 mobility measurement.

In one embodiment, in response to the terminal needing to perform mobility measurement of a neighboring cell based on the measurement gap, the measurement gap configuration information indicates a measurement gap; the measurement gap is used to jointly determine the L1 measurement gap with a sharing factor related to the layer 3 (L3) measurement gap.

Exemplarily, the sharing factor may be a coefficient, for example, if the sharing factor is 2, the measurement gap indicated by the measurement gap configuration information may be multiplied by 2 to obtain two measurement gaps, one of which is used for L1 mobility measurement and the other for L2 mobility measurement.

In one embodiment, the sharing factor is determined based on a protocol rule; or, the measurement gap configuration information indicates the sharing factor.

In one embodiment, the configuration information for the layer 1 (L1) mobility measurement is sent to the terminal via a radio resource control (RRC) message; wherein the configuration information includes frequency information for the mobility measurement; the frequency information indicates at least one of the following: a service frequency; an intra-frequency frequency; and an inter-frequency frequency.

In an embodiment of the present disclosure, configuration information for L1 mobility measurement is sent to a terminal; wherein the configuration information includes frequency information for mobility measurement; the frequency information indicates at least one of the following: a service frequency; an intra-frequency frequency; and an inter-frequency frequency. Here, since the access network device sends frequency information indicating at least one of the service frequency, intra-frequency frequency, and inter-frequency frequency to the terminal, after receiving the frequency information, the terminal can perform L1 intra-frequency cells and/or inter-frequency cells mobility measurement based on the frequency information. Compared with the method of only performing L1 intra-frequency cells mobility measurement, the terminal can perform mobility measurement of intra-frequency cells and/or inter-frequency cells, which is beneficial to the management of mobility measurement.

It should be noted that those skilled in the art can understand that the method provided in the embodiments of the present disclosure can be executed alone or together with some methods in the embodiments of the present disclosure or some methods in related technologies.

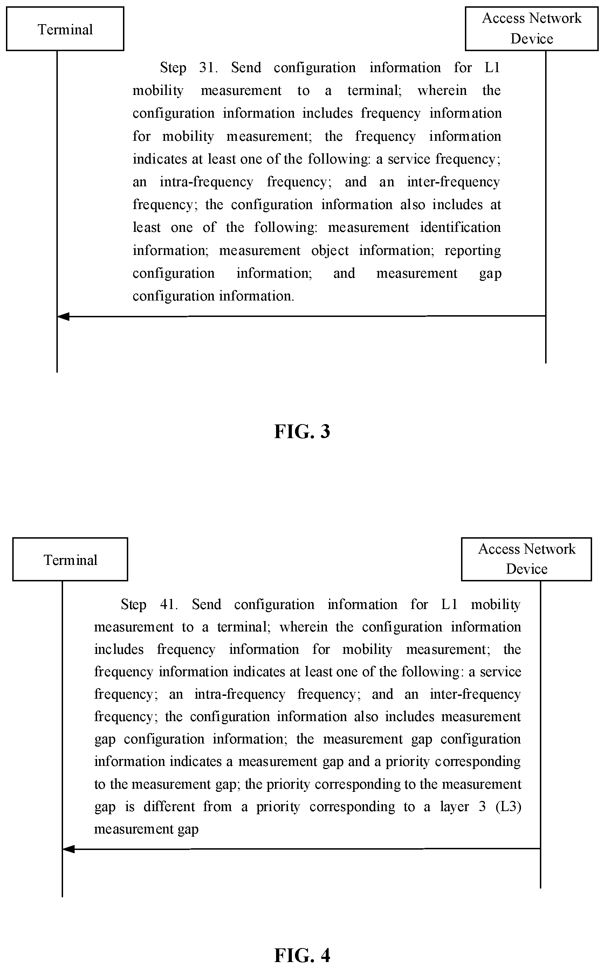

As shown in FIG. 3, this embodiment provides a layer 1 (L1) mobility measurement method, wherein the method is performed by an access network device, and the method includes:

Step 31. Send configuration information for L1 mobility measurement to a terminal; wherein the configuration information includes frequency information for mobility measurement; the frequency information indicates at least one of the following: a service frequency; an intra-frequency frequency; and an inter-frequency frequency; the configuration information also includes at least one of the following: measurement identification information; measurement object information; reporting configuration information; and measurement gap configuration information.

In one embodiment, the measurement object information indicates the target object of the measurement, and the target object may be a frequency point, for example, a service frequency point, an intra-frequency frequency point and/or an inter-frequency frequency point. The measurement object information may also indicate the configuration parameter of the reference signal corresponding to the target object, the SMTC parameter of the target object and/or the QCL relationship.

In an embodiment, the measurement object information indicates at least one of the following:
A target frequency point to be measured;
A reference signal configuration;
An SS block based RRM measurement timing configuration (SMTC) configuration; and
A quasi co-located (QCL) relationship.

In one embodiment, the reference signal configuration reuses the reference signal configuration of the channel state information (CSI) reporting. Exemplarily, the configuration parameters of the reference signal may reuse the parameter configured by the CSI-ResourceConfig message in the CSI reporting in the related art.

In one embodiment, the reporting configuration information indicates a measurement reporting rule, and the measurement reporting rule may indicate a measurement reporting identifier and a measurement reporting configuration parameter corresponding to the identifier, wherein the configuration parameter may include an event-triggered reporting parameter and/or a period-triggered reporting parameter. In this way, the terminal can perform the reporting of the measurement result of the mobility measurement based on the measurement reporting rule.

In one embodiment, the measurement identification information indicates an identification indicating a mapping relationship between a predetermined measurement object and a predetermined measurement reporting configuration parameter. Exemplarily, if the terminal determines that the measurement start threshold is met, the terminal determines whether to perform measurement corresponding to the start threshold based on the presence or absence of the measurement identification information.

In an embodiment, the measurement gap configuration information indicates a measurement gap. The measurement gap configuration information may be configured in units of FR or in units of a single terminal.

It should be noted that those skilled in the art can understand that the method provided in the embodiments of the present disclosure can be executed alone or together with some methods in the embodiments of the present disclosure or some methods in related technologies.

As shown in FIG. 4, this embodiment provides a layer 1 (L1) mobility measurement method, wherein the method is performed by an access network device, and the method includes:

Step 41. Send configuration information for L1 mobility measurement to a terminal; wherein the configuration information includes frequency information for mobility measurement; the frequency information indicates at least one of the following: a service frequency; an intra-frequency frequency; and an inter-frequency frequency; the configuration information also includes measurement gap configuration information; the measurement gap configuration information indicates a measurement gap and a priority corresponding to the measurement gap; the priority corresponding to the measurement gap is different from a priority corresponding to a layer 3 (L3) measurement gap.

In one embodiment, it is determined whether the terminal needs to perform mobility measurement of a neighboring cell based on a measurement gap; in response to the terminal needing to perform mobility measurement of a neighboring cell based on the measurement gap, the configuration information includes the measurement gap configuration information; or, in response to the terminal not needing to perform mobility measurement of a neighboring cell based on the measurement gap, the configuration information does not include the measurement gap configuration information. It should be noted that, in response to the center frequency of the reference signal of the serving cell of the terminal being the same as the center frequency of the target reference signal to be measured, and the subcarrier spacing between the two being the same, and the target reference signal to be measured being completely included within the activated bandwidth part (BWP, Bandwidth Part) of the terminal, it does not need to perform mobility measurement of the neighboring cell based on the measurement gap, otherwise, it needs to perform mobility measurement of the neighboring cell based on the measurement gap.

In one embodiment, in response to the terminal needing to perform mobility measurement of a neighboring cell based on the measurement gap, the measurement gap configuration information indicates a measurement gap and a priority corresponding to the measurement gap; the priority corresponding to the measurement gap is different from the priority corresponding to the layer 3 (L3) measurement gap. It should be noted that the L3 measurement gap is a measurement gap configured for L3 mobility measurement.

In one embodiment, the priority of the measurement gap configured for the L1 mobility measurement is higher than the priority of the measurement gap configured for the L3 mobility measurement. Thus, in response to a conflict between the timing of the L1 mobility measurement and the timing of the L3 mobility measurement, preferentially, the L1 mobility measurement is performed based on the measurement gap configured for the L1 mobility measurement.

In one embodiment, the priority of the measurement gap configured for the L1 mobility measurement is lower than the priority of the measurement gap configured for the L3 mobility measurement. Thus, in response to a conflict between the timing of the L1 mobility measurement and the timing of the L3 mobility measurement, preferentially, the L3 mobility measurement is performed based on the measurement gap configured for the L3 mobility measurement.

In this way, based on the priority of the measurement gap and the relationship between the priority corresponding to L1 and the priority corresponding to L3, the mobility measurement of the layer with higher priority can be performed preferentially. In this way, the conflict in the timing of performing mobility measurements on different layers can be reduced, thereby improving the reliability of mobility measurements in wireless network communications.

It should be noted that those skilled in the art can understand that the method provided in the embodiments of the present disclosure can be executed alone or together with some methods in the embodiments of the present disclosure or some methods in related technologies.

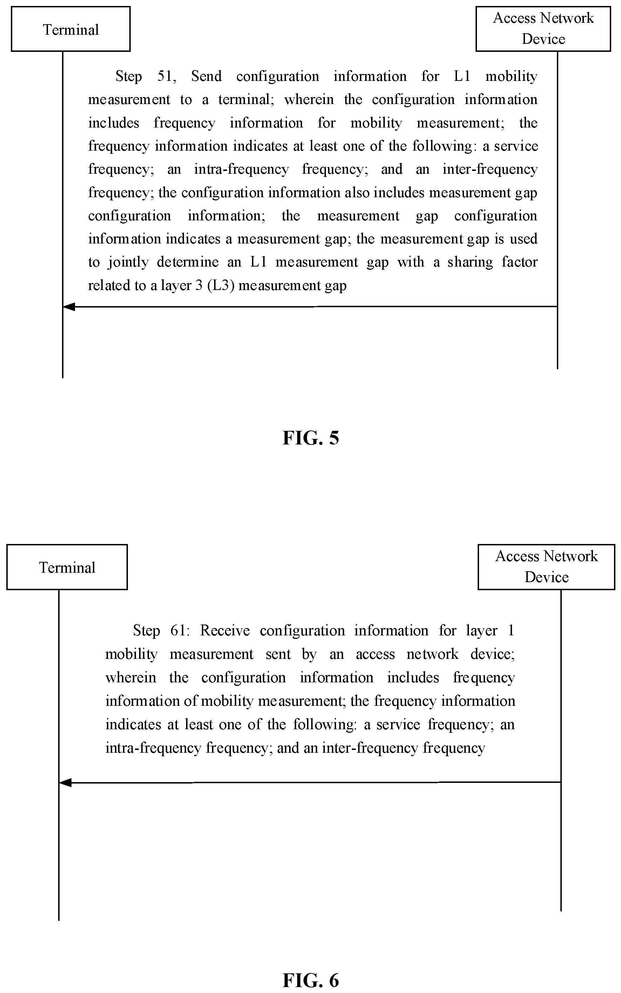

As shown in FIG. 5, this embodiment provides a layer 1 (L1) mobility measurement method, wherein the method is performed by an access network device, and the method includes:

Step 51, Send configuration information for L1 mobility measurement to a terminal; wherein the configuration information includes frequency information for mobility measurement; the frequency information indicates at least one of the following: a service frequency; an intra-frequency frequency; and an inter-frequency frequency; the configuration information also includes measurement gap configuration information; the measurement gap configuration information indicates a measurement gap; the measurement gap is used to jointly determine an L1 measurement gap with a sharing factor related to a layer 3 (L3) measurement gap.

Exemplarily, the sharing factor may be a coefficient, for example, if the sharing factor is 2, the measurement gap indicated by the measurement gap configuration information may be multiplied by 2 to obtain two measurement gaps, one of which is used for L1 mobility measurement and the other for L2 mobility measurement.

In one embodiment, the sharing factor is determined based on a protocol rule; or, the measurement gap configuration information indicates the sharing factor.

In this way, based on the sharing factor, the mobility measurements of L1 and L3 can be performed in the corresponding time gaps respectively corresponding to L1 and L3 determined according to the sharing factor. In this way, the conflict in the timing when different layers perform mobility measurements can be reduced, and the reliability of mobility measurements in wireless network communications can be improved.

It should be noted that those skilled in the art can understand that the method provided in the embodiments of the present disclosure can be executed alone or together with some methods in the embodiments of the present disclosure or some methods in related technologies.

As shown in FIG. 6, this embodiment provides a layer 1 (L1) mobility measurement method, wherein the method is performed by a terminal, and the method includes:
Step 61: Receive configuration information for layer 1 mobility measurement sent by an access network device;
The configuration information includes frequency information of mobility measurement; the frequency information indicates at least one of the following: a service frequency; an intra-frequency frequency; and an inter-frequency frequency.

Here, the terminal involved in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of a new air interface NR terminal (for example, an R17 NR terminal).

The access network device involved in the present disclosure may be a base station, and the base station may be various types of base stations, for example, a base station of a third generation mobile communication (3G) network, a base station of a fourth generation mobile communication (4G) network, a base station of a fifth generation mobile communication (5G) network, or other evolved base stations.

In one embodiment, the L1 mobility measurement includes at least one measurement:
Layer 1 RSRP measurement;
Layer 1 SINR measurement;
Layer 1 RSRQ measurement;
Beam failure measurement for beam failure recovery; and
Candidate beam measurement for beam failure recovery.

In one embodiment, configuration information for layer 1 mobility measurement sent by a base station is received; wherein the configuration information includes frequency information for mobility measurement; the frequency information indicates at least one of the following: a service frequency; an intra-frequency frequency; and an inter-frequency frequency. The L1 mobility measurement is performed based on the configuration information.

In one embodiment, the configuration information further includes at least one of the following:
Measurement identification information;
Measurement object information;
Reporting configuration information; and
Measurement gap configuration information.

In one embodiment, the measurement object information indicates the target object of the measurement, and the target object may be a frequency point, for example, a service frequency point, an intra-frequency frequency point and/or an inter-frequency frequency point. The measurement object information may also indicate the configuration parameters of the reference signal corresponding to the target object, the SS block based RRM measurement timing configuration (SMTC) parameter of the target object and/or the quasi co-located (QCL, Quasi CoLoacted) relationship.

In an embodiment, the measurement object information indicates at least one of the following:
A target frequency point to be measured;
A reference signal configuration;
An SS block based RRM measurement timing configuration (SMTC) parameter; and
A quasi co-located (QCL) relationship.

In one embodiment, the reference signal configuration reuses the reference signal configuration reported by the channel state information (CSI). Exemplarily, the configuration parameters of the reference signal may reuse the parameters configured by the CSI-ResourceConfig message in the CSI reporting in the related art.

In one embodiment, the reporting configuration information indicates a measurement reporting rule, and the measurement reporting rule may indicate a measurement reporting identifier and a measurement reporting configuration parameter corresponding to the identifier, wherein the configuration parameter may include an event-triggered reporting parameter and/or a period-triggered reporting parameter. In this way, the terminal can perform the reporting of the measurement result of the mobility measurement based on the measurement reporting rule.

In one embodiment, the measurement identification information indicates an identification indicating a mapping relationship between a predetermined measurement object and a predetermined measurement reporting configuration parameter. Exemplarily, if the terminal determines that the measurement start threshold is met, the terminal determines whether to start the measurement corresponding to the start threshold based on the presence or absence of the measurement identification information.

In an embodiment, the measurement gap configuration information indicates a measurement gap. The measurement gap configuration information may be configured in units of frequency range (FR) or in units of a single terminal.

In one embodiment, in response to the terminal needing to perform mobility measurement of a neighboring cell based on the measurement gap, the configuration information includes the measurement gap configuration information; or, in response to the terminal not needing to perform mobility measurement of a neighboring cell based on the measurement gap, the configuration information does not include the measurement gap configuration information. It should be noted that, in response to the center frequency of the reference signal of the serving cell of the terminal being the same as the center frequency of the target reference signal to be measured, and the subcarrier spacing between the two being the same, and the target reference signal to be measured being completely included within the activated bandwidth part (BWP, Bandwidth Part) of the terminal, it does not need to perform mobility measurement of the neighboring cell based on the measurement gap, otherwise, it needs to perform mobility measurement of the neighboring cell based on the measurement gap.

In one embodiment, in response to the terminal needing to perform mobility measurement of a neighboring cell based on the measurement gap, the measurement gap configuration information indicates a measurement gap and a priority corresponding to the measurement gap; the priority corresponding to the measurement gap is different from the priority corresponding to the layer 3 (L3) measurement gap. It should be noted that the L3 measurement gap is a measurement gap configured for L3 mobility measurement.

In one embodiment, the priority of the measurement gap configured for the L1 mobility measurement is higher than the priority of the measurement gap configured for the L3 mobility measurement. Thus, in response to a conflict between the timing of the L1 mobility measurement and the timing of the L3 mobility measurement, preferentially, the L1 mobility measurement is performed based on the measurement gap configured for the L1 mobility measurement.

In one embodiment, the priority of the measurement gap configured for the L1 mobility measurement is lower than the priority of the measurement gap configured for the L3 mobility measurement. Thus, in response to a conflict between the timing of the L1 mobility measurement and the timing of the L3 mobility measurement, preferentially, the L3 mobility measurement is performed based on the measurement gap configured for the L3 mobility measurement.

In this way, based on the priority of the measurement gap and the relationship between the priority corresponding to L1 and the priority corresponding to L3, the mobility measurement of the layer with higher priority can be performed preferentially. In this way, the conflict in the timing of performing mobility measurements on different layers can be reduced, thereby improving the reliability of mobility measurements in wireless network communications.

In one embodiment, in response to the terminal needing to perform mobility measurement of a neighboring cell based on the measurement gap, the measurement gap configuration information indicates a measurement gap; the measurement gap is used to jointly determine the L1 measurement gap with a sharing factor related to the layer 3 (L3) measurement gap.

Exemplarily, the sharing factor may be a coefficient, for example, if the sharing factor is 2, the measurement gap indicated by the measurement gap configuration information may be multiplied by 2 to obtain two measurement gaps, one of which is used for L1 mobility measurement and the other for L2 mobility measurement.

In one embodiment, the sharing factor is determined based on a protocol rule; or, the measurement gap configuration information indicates the sharing factor.

In this way, based on the sharing factor, the mobility measurements of L1 and L3 can be performed in the corresponding time gaps respectively corresponding to L1 and L3 determined according to the sharing factor. In this way, the conflict in the timing when different layers perform mobility measurements can be reduced, and the reliability of mobility measurements in wireless network communications can be improved.

In one embodiment, the configuration information for layer 1 (L1) mobility measurement is received by an access network device through a radio resource control RRC message; wherein the configuration information includes frequency information of the mobility measurement; the frequency information indicates at least one of the following: a service frequency; an intra-frequency frequency; and an inter-frequency frequency.

In one embodiment, configuration information for L1 mobility measurement sent by a base station is received; wherein the configuration information includes frequency information of the mobility measurement; the frequency information indicates at least one of the following: a service frequency; an intra-frequency frequency; and an inter-frequency frequency. In response to receiving the configuration information, for the L1 neighboring cell measurement for which a measurement gap needs to be configured, the neighboring cell measurement is performed within the measurement gap indicated by the configuration information.

In one embodiment, configuration information for L1 mobility measurement sent by a base station is received; wherein the configuration information includes frequency information of the mobility measurement; the frequency information indicates at least one of the following: a service frequency; an intra-frequency frequency; and an inter-frequency frequency. In response to the center frequency of the reference signal of the serving cell of the terminal being the same as the center frequency of the target reference signal to be measured, and the subcarrier spacing between the two being the same, and the target reference signal to be measured being completely included within the activated bandwidth part (BWP, Bandwidth Part) of the terminal, it is not necessary to perform the neighboring cell measurement based on the measurement gap.

In one embodiment, configuration information for L1 mobility measurement sent by a base station is received; wherein the configuration information includes frequency information of the mobility measurement; the frequency information indicates at least one of the following: a service frequency; an intra-frequency frequency; and an inter-frequency frequency. In response to not configuring an L1 measurement gap while performing L1 neighboring cell measurement that requires a measurement gap, an L3 measurement gap is shared.

In one embodiment, the shared L3 measurement gap may be a measurement occasion of shared L3 mobility measurement. Exemplarily, the measurement gap sharing mechanism may be configured through an RRC message to configure the sharing of the measurement gap between the L3 intra-frequency measurement, the L3 inter-frequency measurement, the L1 intra-frequency measurement, and the L1 inter-frequency measurement. This may be achieved by extending the existing measurement gap sharing scheme MeasGapSharingScheme.

In one embodiment, the shared L3 measurement occasion may be agreed upon by a protocol, that is, the protocol may directly extend the L3 measurement delay by an extension factor K, and the L1 measurement uses a measurement occasion of (1-K) times the measurement gap, where 0<K<1.

In one embodiment, the measurement gap sharing mechanism can be configured through RRC messages, which can be implemented by reusing the existing measurement gap sharing scheme MeasGapSharingScheme, and the measurement gap is configured to be shared between the intra-frequency measurement and the inter-frequency measurement. The measurement occasions of the intra-frequency measurement of L1 and L3 can be distinguished by the expansion coefficient Y1, and the measurement occasions of the inter-frequency measurement of L1 and L3 can be distinguished by the expansion coefficient Y2. In the embodiment, 0<Y1<1, 0<Y2<1.

It should be noted that those skilled in the art can understand that the method provided in the embodiments of the present disclosure can be executed alone or together with some methods in the embodiments of the present disclosure or some methods in related technologies.

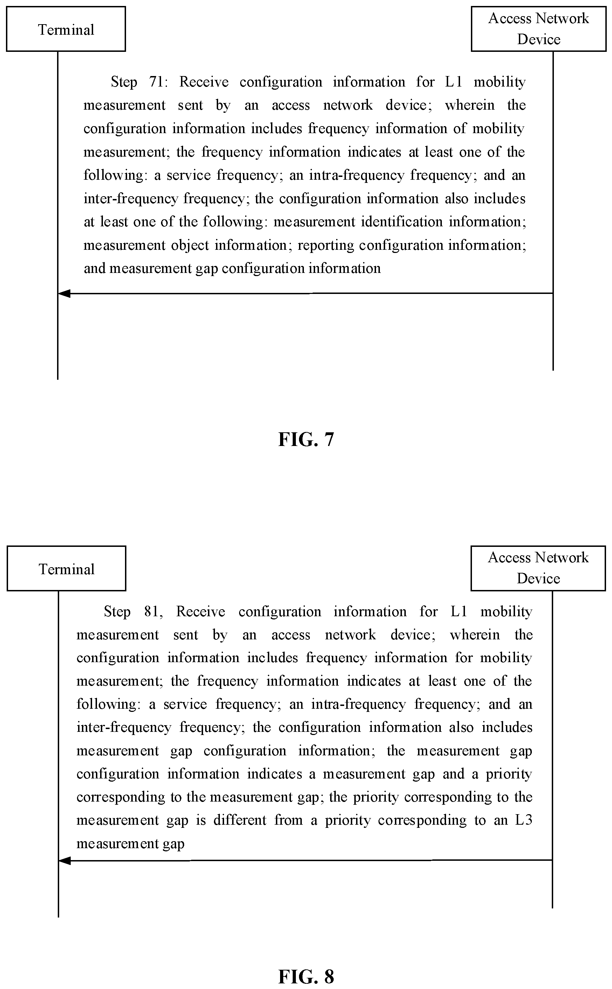

FIG. 7, this embodiment provides a layer 1 (L1) mobility measurement method, wherein the method is executed by a terminal, and the method includes:
Step 71: Receive configuration information for L1 mobility measurement sent by an access network device;
The configuration information includes frequency information of mobility measurement; the frequency information indicates at least one of the following: a service frequency; an intra-frequency frequency; and an inter-frequency frequency; the configuration information also includes at least one of the following: measurement identification information; measurement object information; reporting configuration information; and measurement gap configuration information.

In one embodiment, the measurement object information indicates the target object of the measurement, and the target object may be a frequency point, for example, a service frequency point, an intra-frequency frequency point and/or an inter-frequency frequency point. The measurement object information may also indicate the configuration parameters of the reference signal corresponding to the target object, the SS block based RRM measurement timing configuration (SMTC) parameter of the target object and/or the quasi co-located (QCL, Quasi CoLoacted) relationship.

In an embodiment, the measurement object information indicates at least one of the following:
A target frequency point to be measured;
A reference signal configuration;
An SS block based RRM measurement timing configuration (SMTC) parameter; and
A quasi co-located (QCL) relationship.

In one embodiment, the reference signal configuration reuses the reference signal configuration reported by the channel state information (CSI). Exemplarily, the configuration parameters of the reference signal may reuse the parameters configured by the CSI-ResourceConfig message in the CSI reporting in the related art.

In one embodiment, the reporting configuration information indicates a measurement reporting rule, and the measurement reporting rule may indicate a measurement reporting identifier and a measurement reporting configuration parameter corresponding to the identifier, wherein the configuration parameter may include an event-triggered reporting parameter and/or a period-triggered reporting parameter. In this way, the terminal can perform the reporting of the measurement result of the mobility measurement based on the measurement reporting rule.

In one embodiment, the measurement identification information indicates an identification indicating a mapping relationship between a predetermined measurement object and a predetermined measurement reporting configuration parameter. Exemplarily, if the terminal determines that the measurement start threshold is met, the terminal determines whether to start the measurement corresponding to the start threshold based on the presence or absence of the measurement identification information.

In an embodiment, the measurement gap configuration information indicates a measurement gap. The measurement gap configuration information may be configured in units of frequency range (FR) or in units of a single terminal.

In one embodiment, in response to the terminal needing to perform mobility measurement of a neighboring cell based on the measurement gap, the configuration information includes the measurement gap configuration information; or, in response to the terminal not needing to perform mobility measurement of a neighboring cell based on the measurement gap, the configuration information does not include the measurement gap configuration information. It should be noted that, in response to the center frequency of the reference signal of the serving cell of the terminal being the same as the center frequency of the target reference signal to be measured, and the subcarrier spacing between the two being the same, and the target reference signal to be measured being completely included within the activated bandwidth part (BWP, Bandwidth Part) of the terminal, it does not need to perform mobility measurement of the neighboring cell based on the measurement gap.

It should be noted that those skilled in the art can understand that the method provided in the embodiments of the present disclosure can be executed alone or together with some methods in the embodiments of the present disclosure or some methods in related technologies.

As shown in FIG. 8, this embodiment provides a layer 1 (L1) mobility measurement method, wherein the method is performed by a terminal, and the method includes:
Step 81, Receive configuration information for L1 mobility measurement sent by an access network device; wherein the configuration information includes frequency information for mobility measurement; the frequency information indicates at least one of the following: a service frequency; an intra-frequency frequency; and an inter-frequency frequency; the configuration information also includes measurement gap configuration information; the measurement gap configuration information indicates a measurement gap and a priority corresponding to the measurement gap; the priority corresponding to the measurement gap is different from a priority corresponding to an L3 measurement gap.

In one embodiment, in response to the terminal needing to perform mobility measurement of a neighboring cell based on the measurement gap, the measurement gap configuration information indicates a measurement gap and a priority corresponding to the measurement gap; the priority corresponding to the measurement gap is different from the priority corresponding to the layer 3 (L3) measurement gap. It should be noted that the L3 measurement gap is a measurement gap configured for L3 mobility measurement.

In one embodiment, the priority of the measurement gap configured for the L1 mobility measurement is higher than the priority of the measurement gap configured for the L3 mobility measurement. Thus, in response to a conflict between the timing of the L1 mobility measurement and the timing of the L3 mobility measurement, preferentially, the L1 mobility measurement is performed based on the measurement gap configured for the L1 mobility measurement.

In one embodiment, the priority of the measurement gap configured for the L1 mobility measurement is lower than the priority of the measurement gap configured for the L3 mobility measurement. Thus, in response to a conflict between the timing of the L1 mobility measurement and the timing of the L3 mobility measurement, preferentially, the L3 mobility measurement is performed based on the measurement gap configured for the L3 mobility measurement.

It should be noted that those skilled in the art can understand that the method provided in the embodiments of the present disclosure can be executed alone or together with some methods in the embodiments of the present disclosure or some methods in related technologies.

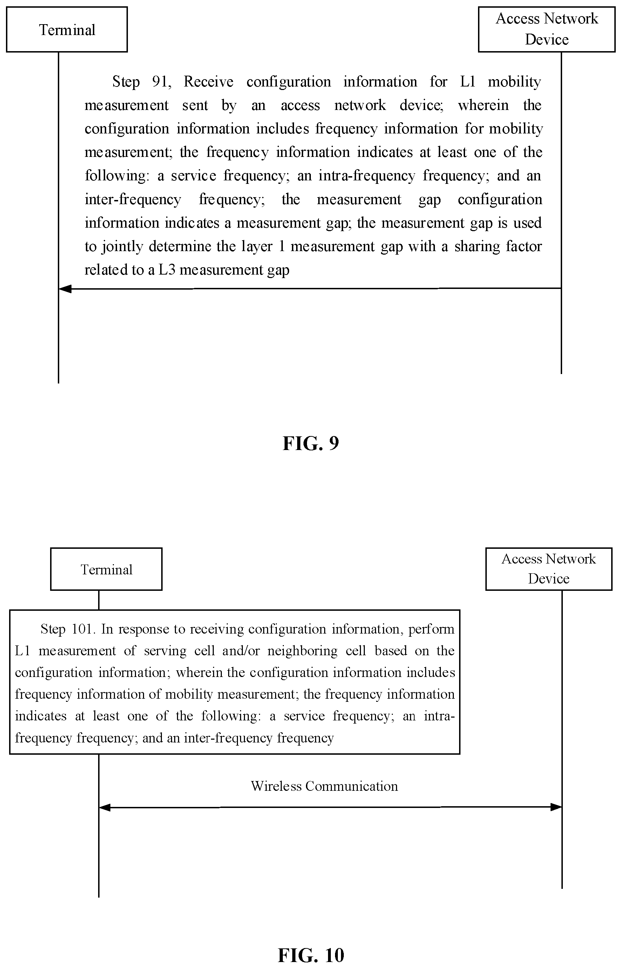

As shown in FIG. 9, this embodiment provides a layer 1 (L1) mobility measurement method, wherein the method is performed by a terminal, and the method includes:
Step 91, Receive configuration information for L1 mobility measurement sent by an access network device; wherein the configuration information includes frequency information for mobility measurement; the frequency information indicates at least one of the following: a service frequency; an intra-frequency frequency; and an inter-frequency frequency; the measurement gap configuration information indicates a measurement gap; the measurement gap is used to jointly determine the layer 1 measurement gap with a sharing factor related to a L3 measurement gap.

Exemplarily, the sharing factor may be a coefficient, for example, if the sharing factor is 2, the measurement gap indicated by the measurement gap configuration information may be multiplied by 2 to obtain two measurement gaps, one of which is used for L1 mobility measurement and the other for L2 mobility measurement.

In one embodiment, the sharing factor is determined based on a protocol rule; or, the measurement gap configuration information indicates the sharing factor.

It should be noted that those skilled in the art can understand that the method provided in the embodiments of the present disclosure can be executed alone or together with some methods in the embodiments of the present disclosure or some methods in related technologies.

As shown in FIG. 10, this embodiment provides a layer 1 (L1) mobility measurement method, wherein the method is executed by a terminal, and the method includes:
Step 101. In response to receiving configuration information, perform L1 measurement of serving cell and/or neighboring cell based on the configuration information; wherein the configuration information includes frequency information of mobility measurement; the frequency information indicates at least one of the following: a service frequency; an intra-frequency frequency; and an inter-frequency frequency.

In one embodiment, configuration information for L1 mobility measurement sent by the base station is received; wherein the configuration information includes frequency information of the mobility measurement; the frequency information indicates at least one of the following: a service frequency; an intra-frequency frequency; and an inter-frequency frequency. In response to receiving the configuration information, for the L1 neighboring cell measurement for which a measurement gap needs to be configured, the neighboring cell measurement is performed within the measurement gap indicated by the configuration information.

In one embodiment, configuration information for L1 mobility measurement sent by the base station is received; wherein the configuration information includes frequency information of the mobility measurement; the frequency information indicates at least one of the following: a service frequency; an intra-frequency frequency; and an inter-frequency frequency. In response to the center frequency of the reference signal of the serving cell of the terminal being the same as the center frequency of the target reference signal to be measured, and the subcarrier spacing between the two being the same, and the target reference signal to be measured being completely included within the activated bandwidth part (BWP, Bandwidth Part) of the terminal, it is not necessary to perform the neighboring cell measurement based on the measurement gap.

It should be noted that those skilled in the art can understand that the method provided in the embodiments of the present disclosure can be executed alone or together with some methods in the embodiments of the present disclosure or some methods in related technologies.

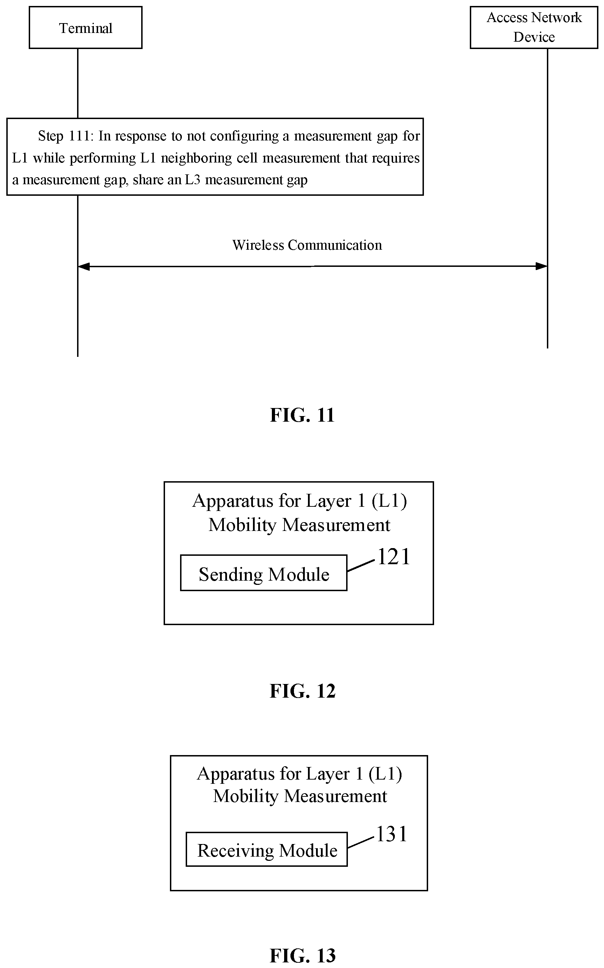

As shown in FIG. 11, this embodiment provides a layer 1 (L1) mobility measurement method, wherein the method is executed by a terminal, and the method includes:
Step 111: In response to not configuring a measurement gap for L1 while performing L1 neighboring cell measurement that requires a measurement gap, share an L3 measurement gap.

In one embodiment, configuration information for L1 mobility measurement sent by a base station is received; wherein the configuration information includes frequency information for mobility measurement; the frequency information indicates at least one of the following: a service frequency; an intra-frequency frequency; and an inter-frequency frequency. Based on a determination result of whether the configuration information includes an L1 measurement gap, it is determined whether the L1 measurement gap is configured. In response to not configuring the L1 measurement gap while performing neighboring cell measurement of L1 that requires a measurement gap, the L3 measurement gap is shared.

In one embodiment, the shared L3 measurement gap may be a shared L3 measurement occasion of mobility measurement. Exemplarily, the measurement gap sharing mechanism may be configured through an RRC message to configure the sharing of the measurement gap between the L3 intra-frequency measurement, the L3 inter-frequency measurement, the L1 intra-frequency measurement, and the L1 inter-frequency measurement. This may be achieved by extending the existing measurement gap sharing scheme MeasGapSharingScheme.

In one embodiment, the shared L3 measurement occasion may be agreed upon by a protocol, that is, the protocol may directly extend the L3 measurement delay by an extension factor K, and the L1 measurement uses a measurement occasion of (1-K) times the measurement gap, where 0<K<1.

In one embodiment, the measurement gap sharing mechanism can be configured through RRC messages, which can be implemented by reusing the existing measurement gap sharing scheme MeasGapSharingScheme, and the measurement gap is configured to be shared between the intra-frequency measurement and the inter-frequency measurement. In the embodiment, the measurement occasions of the intra-frequency measurement of L1 and L3 can be distinguished by the expansion coefficient Y1, and the measurement occasions of the inter-frequency measurement of L1 and L3 can be distinguished by the expansion coefficient Y2. In the embodiment, 0<Y1<1, 0<Y2<1.

In one embodiment,
MeasGapSharingScheme::= ENUMERATED {scheme00, scheme01, scheme10, scheme11}
then:
In L1 intra-frequency measurement, the measurement gap sharing coefficient is: K_{L1_intra} = 1/X*100*Y1;
In L3 intra-frequency measurement, the measurement gap sharing coefficient is: K_{L3_intra} = 1/(100-X)*100*(1-Y1);
In L1 inter-frequency measurement, the measurement gap sharing coefficient is: K_{L1_inter} = 1/X*100*Y2;
In L3 inter-frequency measurement, the measurement gap sharing coefficient is: K_{L3_inter} = 1/(100-X)*100*(1-Y2).

In one embodiment, the L3 measurement gap is shared based on the measurement gap sharing scheme configuration information of the RRC message; or, the L3 measurement gap is shared based on the protocol rule.

It should be noted that those skilled in the art can understand that the method provided in the embodiments of the present disclosure can be executed alone or together with some methods in the embodiments of the present disclosure or some methods in related technologies.

As shown in FIG. 12, an embodiment of the present disclosure provides an apparatus for layer 1 (L1) mobility measurement, wherein the apparatus includes:
a sending module 121, configured to send configuration information for layer 1 mobility measurement to the terminal;
the configuration information includes frequency information of mobility measurement; the frequency information indicates at least one of the following: a service frequency; an intra-frequency frequency; and an inter-frequency frequency.

It should be noted that those skilled in the art can understand that the method provided in the embodiments of the present disclosure can be executed alone or together with some methods in the embodiments of the present disclosure or some methods in related technologies.

As shown in FIG. 13, an embodiment of the present disclosure provides an apparatus for layer 1 (L1) mobility measurement, wherein the apparatus includes:
a Receiving Module 131, configured to receive configuration information for layer 1 mobility measurement sent by the access network device;
the configuration information includes frequency information of mobility measurement; the frequency information indicates at least one of the following: a service frequency; an intra-frequency frequency; and an inter-frequency frequency.

It should be noted that those skilled in the art can understand that the method provided in the embodiments of the present disclosure can be executed alone or together with some methods in the embodiments of the present disclosure or some methods in related technologies.

The present disclosure provides a communication device, the communication device comprising:
a processor; and
a memory for storing processor-executable instructions;
the processor is configured to: implement the method applied to any embodiment of the present disclosure when running the executable instructions.

The processor may include various types of storage media, which are non-transitory computer storage media that can continue to record information stored thereon after the communication device loses power.

The processor may be connected to the memory via a bus or the like to read the executable program stored in the memory.

An embodiment of the present disclosure further provides a computer storage medium, wherein the computer storage medium stores a computer executable program, and when the executable program is executed by a processor, the method of any embodiment of the present disclosure is implemented.

Regarding the apparatus in the above embodiment, the specific manner in which each module performs operations has been described in detail in the embodiment of the method, and will not be elaborated here.

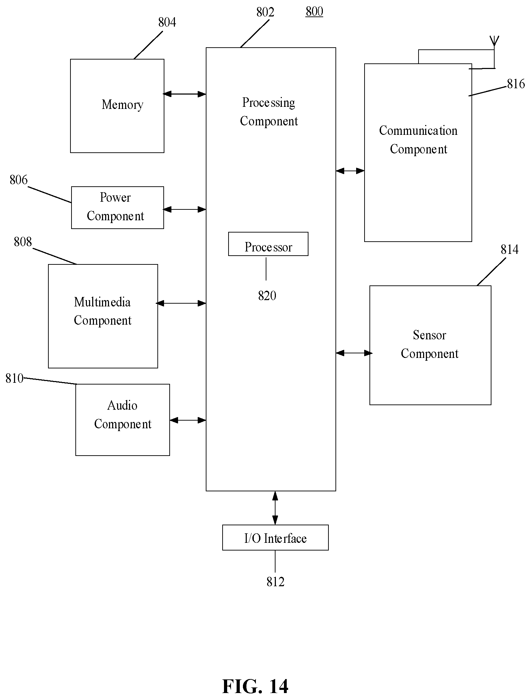

As shown in FIG. 14, an embodiment of the present disclosure provides a structure of a terminal.

Referring to FIG. 14, the terminal 800 is shown. The embodiment provides a terminal 800, which specifically can be a mobile phone, a computer, a digital broadcast terminal, a messaging device, a game console, a tablet device, a medical device, a fitness device, a personal digital assistant, and the like.

Referring to FIG. 14, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the terminal 800, such as operations associated with display, telephone calls, data communications, camera operations, and recording operations. The processing component 802 may include one or more processors 820 to execute instructions to complete all or part of the steps of the above method. Additionally, processing component 802 may include one or more modules that facilitate interaction between processing component 802 and other components. For example, processing component 802 may include a multimedia module to facilitate interaction between multimedia component 808 and processing component 802.

The memory 804 is configured to store various types of data to support operations at the device 800. Examples of such data include instructions for any application or method operating on the terminal 800, contact data, phonebook data, messages, pictures, videos, etc. The memory 804 can be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power supply component 806 provides power to various components of the terminal 800. The power component 806 may include a power management system, one or more power supplies, and other components associated with generating, managing, and distributing power for terminal 800.

The multimedia component 808 includes a screen providing an output interface between the terminal 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 808 includes a front camera and/or a rear camera. When the device 800 is in an operation mode, such as a photographing mode or a video mode, the front camera and/or the rear camera can receive external multimedia data. Each front camera and rear camera can be a fixed optical lens system or have focal length and optical zoom capability.

The audio component 810 is configured to output and/or input audio signals. For example, the audio component 810 includes a microphone (MIC), which is configured to receive an external audio signal when the terminal 800 is in an operation mode, such as a call mode, a recording mode and a voice recognition mode. Received audio signals may be further stored in memory 804 or sent via communication component 816. In some embodiments, the audio component 810 also includes a speaker for outputting audio signals.

The I/O interface 812 provides an interface between the processing component 802 and a peripheral interface module, which may be a keyboard, a click wheel, a button, and the like. These buttons may include, but are not limited to: a home button, volume buttons, start button, and lock button.

The sensor component 814 includes one or more sensors for providing terminal 800 with various aspects of status assessment. For example, the sensor component 814 can detect the open/closed state of the device 800, the relative positioning of components, such as the display and the keypad of the terminal 800, the sensor component 814 can also detect the terminal 800 or a change in the position of a component of the terminal 800, the presence or absence of user's contact with the terminal 800, the change of orientation or acceleration/deceleration of the terminal 800 and the temperature change of the terminal 800. The sensor component 814 may include a proximity sensor configured to detect the presence of nearby objects in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal 800 and other devices. The terminal 800 can access a wireless network based on communication standards, such as Wi-Fi, 2G or 3G, or a combination thereof. In an exemplary embodiment, the communication component 816 receives broadcast signals or broadcast related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra wideband (UWB) technology, bluetooth (BT) technology and other technologies.

In an exemplary embodiment, terminal 800 may be implemented by one or more application specific integrated circuits (ASIC), digital signal processors (DSP), digital signal processing devices (DSPD), programmable logic devices (PLD), field programmable gate array (FPGA), controllers, microcontrollers, microprocessors or other electronic components for performing the method described above.

In an exemplary embodiment, there is also provided a non-transitory computer-readable storage medium including instructions, such as the memory 804 including instructions, which can be executed by the processor 820 of the terminal 800 to implement the above method. For example, the non-transitory computer readable storage medium may be ROM, random access memory (RAM), CD-ROM, magnetic tape, floppy disk, and optical data storage device, and the like.

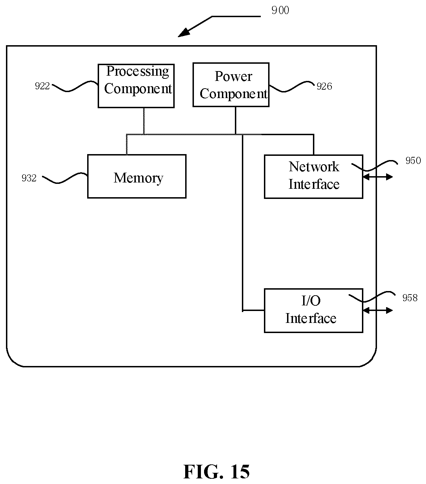

As shown in FIG. 15, an embodiment of the present disclosure shows a structure of a base station. For example, the base station 900 may be provided as a network side device. Referring to FIG. 15, the base station 900 includes a processing component 922, which further includes one or more processors, and a memory resource represented by a memory 932 for storing instructions executable by the processing component 922, such as application programs. The application program stored in memory 932 may include one or more modules each corresponding to a set of instructions. In addition, the processing component 922 is configured to execute instructions, so as to perform any of the aforementioned methods applied to the base station.

Base station 900 may also include a power component 926 configured to perform power management of base station 900, a wired or wireless network interface 950 configured to connect base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other embodiments of the invention will be readily apparent to those skilled in the art from consideration of the specification and practice of the invention disclosed herein. This disclosure is intended to cover any modification, use or adaptation of the present invention, these modifications, uses or adaptations follow the general principles of the present invention and include common knowledge or conventional technical means in the technical field not disclosed in this disclosure. The specification and examples are to be considered exemplary only, with a true scope and spirit of the invention being indicated by the following claims.

It should be understood that the present invention is not limited to the precise constructions which have been described above and shown in the accompanying drawings, and various modifications and changes may be made without departing from the scope thereof. The scope of the invention is limited only by the appended claims.

## Claims

1. A method for layer 1 (L1) mobility measurement, wherein the method is performed by an access network device, and the method comprises:
sending configuration information for L1 mobility measurement to a terminal;
wherein the configuration information comprises frequency information of mobility measurement; and the frequency information indicates at least one of the following: a service frequency; an intra-frequency frequency; and an inter-frequency frequency.

2. The method according to claim 1, wherein the configuration information further comprises at least one of the following:
measurement identification information;
measurement object information;
reporting configuration information; and
measurement gap configuration information.

3. The method according to claim 2, wherein the measurement object information indicates at least one of the following:
a target frequency point to be measured;
a reference signal configuration;
an SS block based RRM measurement timing configuration (SMTC) configuration; and
a quasi co-located (QCL) relationship.

4. The method according to claim 3, wherein the reference signal configuration reuses the reference signal configuration of channel state information (CSI) reporting.

5. The method according to claim 2, wherein the measurement gap configuration information indicates a measurement gap and a priority corresponding to the measurement gap; and the priority corresponding to the measurement gap is different from a priority corresponding to a layer 3 (L3) measurement gap.

6. The method according to claim 2, wherein the measurement gap configuration information indicates a measurement gap; and the measurement gap is used to determine an L1 measurement gap together with a sharing factor related to a layer 3 (L3) measurement gap.

7. The method according to claim 6, wherein the sharing factor is determined based on a protocol rule; or the sharing factor is indicated by the measurement gap configuration information.

8. The method according to claim 1, wherein the sending the configuration information for layer 1 (L1) mobility measurement to the terminal comprises:
sending the configuration information for layer 1 (L1) mobility measurement to the terminal through a radio resource control (RRC) message.

9. A method for layer 1 (L1) mobility measurement, wherein the method is performed by a terminal, and the method comprises:
receiving configuration information for L1 mobility measurement from a base station;
wherein the configuration information comprises frequency information of mobility measurement; and the frequency information indicates at least one of the following: a service frequency; an intra-frequency frequency; and an inter-frequency frequency.

10. The method according to claim 9, wherein the configuration information further comprises at least one of the following:
measurement identification information;
measurement object information;
reporting configuration information; and
measurement gap configuration information.

11. The method according to claim 10, wherein the measurement object information indicates at least one of the following:
a target frequency point to be measured;
a reference signal configuration;
an SS block based RRM measurement timing configuration (SMTC) configuration; and
a quasi co-located (QCL) relationship.

12. The method according to claim 11, wherein the reference signal configuration reuses the reference signal configuration of channel state information (CSI) reporting.

13. The method according to claim 10, wherein the measurement gap configuration information indicates a measurement gap and a priority corresponding to the measurement gap; and the priority corresponding to the measurement gap is different from a priority corresponding to an L3 measurement gap.

14. The method according to claim 10, wherein the measurement gap configuration information indicates a measurement gap; and the measurement gap is used to determine a layer 1 measurement gap together with a sharing factor related to an L3 measurement gap.

15. The method according to claim 14, wherein the sharing factor is determined based on a protocol rule; or the sharing factor is indicated by the measurement gap configuration information.

16. The method according to claim 9, wherein the receiving the configuration information for layer 1 mobility measurement from the base station comprises:
receiving the configuration information for layer 1 mobility measurement from the base station through a radio resource control (RRC) message.

17. The method according to claim 9, wherein the method further comprises:
in response to receiving the configuration information, performing an L1 serving cell and/or a neighboring cell measurement based on the configuration information.

18. The method according to claim 17, wherein the performing the layer 1 serving cell and/or the neighboring cell measurement based on the configuration information comprises:
for the L1 neighboring cell measurement that needs a configured measurement gap, performing the neighboring cell measurement within the measurement gap indicated by the configuration information.

19. The method according to claim 18, wherein the neighboring cell measurement is not needed in response to a case where a center frequency of a reference signal of a serving cell of the terminal is the same as a center frequency of a target reference signal to be measured, a subcarrier spacing of the center frequencies is the same, and the target reference signal to be measured is completely comprised in an activated bandwidth part (BWP) on which the terminal is operated.

20. The method according to claim 9, wherein the method further comprises:
sharing an L3 measurement gap in response to performing L1 neighboring cell measurement requiring a measurement gap while no L1 measurement gap is configured.

21. The method according to claim 20, wherein the sharing the L3 measurement gap comprises:
sharing the L3 measurement gap based on measurement gap sharing scheme configuration information of an RRC message;
or,
sharing the L3 measurement gap based on a protocol rule.

22. A layer 1 (L1) mobility measurement apparatus, wherein the apparatus comprises:
a sending module, configured to send configuration information for layer 1 mobility measurement to the terminal;
wherein the configuration information comprises frequency information of mobility measurement; and the frequency information indicates at least one of the following: a service frequency; an intra-frequency frequency; and an inter-frequency frequency.

23. A layer 1 (L1) mobility measurement apparatus, wherein the apparatus comprises:
a receiving module, configured to receive configuration information for layer 1 mobility measurement from a base station;
wherein the configuration information comprises frequency information of mobility measurement; and the frequency information indicates at least one of the following: a service frequency; an intra-frequency frequency; and an inter-frequency frequency.

24. A communication device, comprising:
an antenna;
a memory; and
a processor, connected to the antenna and the memory respectively, and is configured to control the transmission and reception of the antenna by executing computer executable instructions stored in the memory, and implement the method according to any one of claims 1 to 8 or 9 to 21.

25. A computer storage medium storing computer executable instructions, wherein the computer executable instructions, when being executed by a processor, implements the method according to any one of claims 1 to 8 or 9 to 21.
